# EUROPÄISCHE PATENTSCHRIFT

(11) **EP 2 952 154 B1**
(45) Veröffentlichungstag und Bekanntmachung des Hinweises auf die Patenterteilung: **05.05.2021**
(21) Anmeldenummer: 14171268.7
(22) Anmeldetag: 05.06.2014
(51) Int. Cl.: A61C 13/00, A61C 13/083, A61C 5/77

(54) **Verfahren zur Herstellung mehrerer Dentalrestaurationen sowie Dentalkeramik-Erzeugungsvorrichtung**
Method for producing dental restorations and dental ceramic production device
Procédé de fabrication de restaurations dentaires et dispositif de fabrication de céramiques dentaires

(43) Veröffentlichungstag der Anmeldung: 09.12.2015
(73) Patentinhaber: Ivoclar Vivadent AG, 9494 Schaan (LI)
(72) Erfinder: Ebert, Jörg, 9470 Buchs (CH); Gründenfelder, Robert, 9490 Vaduz (LI); Specht, Tobias, 9491 Ruggell (LI); Voigt, Oliver, 8852 Altendorf (CH)
(74) Vertreter: Baronetzky, Klaus

(56) Entgegenhaltungen:
- WO-A1-03/017864
- US-A1- 2008 142 183
- US-A1- 2008 153 069
- US-A1- 2008 220 395

## Beschreibung

Die Erfindung betrifft ein Verfahren zur Herstellung von Dentalrestaurationen gemäß dem Oberbegriff von Anspruch 1 sowie eine Dentalkeramik-Erzeugungsvorrichtung gemäß dem Oberbegriff von Anspruch 18.

Es ist leit langem bekannt, für die Herstellung von Dentalrestaurationen nach dem Prinzip der verlorenen Form zu arbeiten. Hierzu wird zunächst ein Positivmodell der Dentalrestauration in geeigneter Weise hergestellt, beispielsweise auch nach dem Gusto des Zahntechnikers oder Zahnarztes modelliert, und zwar aus Wachs oder einer anderen rückstandsfrei verbrennbaren Substanz wie einem Polymer.

Dieses Positivmodell wird dann über einen Zubringerkanal, der beispielsweise als stiftförmiges Element aus dem gleichen Material wie das Positivmodells der Dentalrestauration besteht, mit einer sogenannten Muffelbasis verbunden. Diese Muffelbasis besteht aus einer aus Kunststoff bestehenden Scheibe, aus der ein zapfenförmiger Vorsprung aufragt, dessen Stirnfläche als Basis für den Zubringerkanal verwendet wird.

Nachdem das Positivmodell zusammen mit dem Zubringerkanal aufgebracht ist, wird gegebenenfalls auch ein kleiner Radius am Übergang zwischen Zubringerkanal und der Dentalrestauration einerseits bzw. der Stirnfläche der Muffelbasis andererseits angebracht, was in der Regel als Verschwemmen bezeichnet wird.

Auf die scheibenförmige Muffelbasis, die einen Absatz aufweist, wird dann ein Silikonring aufgesteckt und in den so gebildeten Innenraum wird eine selbsthärtende Vergußmasse eingegossen. Diese kann beispielsweise aus Gips oder anderen geeigneten Materialien bestehen.

Nach dem Aushärten wird der Silikonring abgezogen oder abgerollt und die Muffelbasis abgezogen. Hierbei löst sich die Verbindung zwischen der Stirnfläche und dem Zubringerkanal oder den Zubringerkanälen, während die Wachsbestandteile zunächst noch in der ausgehärteten Muffel verbleiben.

Die Muffel wird dann erwärmt, und zwar auf eine Temperatur, die eine rückstandsfreie Entfernung der Wachsbestandteile ermöglicht. Dies kann beispielsweise in einem sogenannten Vorwärmofen geschehen, der eine Temperatur von 700°C bereit hält.

Hieran anschließend wird die Muffel mit den nunmehr anstelle des Positivmodells verbleibenden Hohlräumen oder dem anstelle des Positivmodells verbleibende Hohlraum umgedreht, so dass der Kanal, der dem Zapfen der Muffelbasis entsprach, nach oben freiliegt. Dieser Kanal ist zugleich der Presskanal, und in ihn wird ein Rohling aus einem Material eingebracht, das für die Ausbildung der Dentalrestaurationen geeignet ist, beispielsweise aus einer Dentalkeramik.

Ein Pressofen weist einen Pressstempel auf, der in den Presskanal eindringt und nach einem vorgegebenen Pressprogramm den Rohling zusammen mit der Muffel weiter erwärmt, beispielsweise auf größenordnungsmäßig 1.100°C bei einer Silikat- oder Feldspaltkeramik, oder auf 1.600°C bei einer Oxidkeramik.

Nach einem exakt vorgegebenen Pressprogramm werden dann Druck und Erwärmung im Einklang zueinander gesteuert, so dass der Rohling beim Schmelzen über die Zubringerkanäle in den Hohlraum oder die Hohlräume eindringt und dort nach Möglichkeit blasenfrei die Dentalrestauration erzeugt wird.

Das hier beschriebene Verfahren ist seit mindestens 30 Jahren bekannt und wird heute in weitem Umfang eingesetzt.

In neuerer Zeit wird für die Herstellung des Positivmodells vielfach ein Scan des Mundes des Patienten vorgenommen, und es wird über eine CAD-Software die erwünschte Dentalrestauration entworfen und erzeugt.

Es ist auch bereits vorgeschlagen worden, nach dem computergesteuerten Modellieren für die Erzeugung des Positivmodells ein generatives Verfahren einzusetzen, also beispielsweise über Rapid-Prototyping das Positivmodell zu erzeugen. Als beispielhaft sei hierzu auf die DE 103 32 802 A1 verwiesen.

An sich sind derartige Rapid-Prototyping-Verfahren, die auch hinsichtlich der Auflösung für die Dentaltechnik grundsätzlich geeignet sind, beispielsweise die Stereolithografie, bereits ebenfalls seit recht langer Zeit bekannt, nämlich ebenfalls seit den 80er Jahren.

Im Dentalbereich ist immerhin gemäß der WO 95/28688 A1 seit etwa 20 Jahren die Verwendung der Rapid-Prototyping-Technik für die Herstellung von Modellen bekannt, zu denen auch das vorstehend angeführte Positivmodell gehört.

Trotz der insofern seit recht langer Zeit bekannten und an sich auf der Hand liegenden Vorteile des computergestützen Designs hat sich diese Technik nicht durchgesetzt.

Es ist auch bereits vorgeschlagen worden, anstelle der Herstellung des Dentalrestaurationsteils mittels Pressen ein solches über einen Gießvorgang zu erzeugen. Auch diese Technik ist an sich seit langem bekannt.

In neuerer Zeit ist hierzu vorgeschlagen worden, ein Positivmodell per Computerunterstützung zu erzeugen, und zwar generativ, um so die Notwendigkeit des Frässchritts zu vermeiden. Bei diesem Vorschlag hat die Schwierigkeit eine Rolle gespielt, dass beim Fräsen komplexe Innenecken nur sehr schwer zu realisieren sind. Das Gießen eines Formhohlraums in einer Muffel erlaubt es, die Dentalrestauration zentral in der Muffel vorzusehen. An dieser Stelle hat die Muffel in aller Regel einen eher geringen Temperaturgradienten, denn typischerweise wird die Muffel über eine ringförmig diese umgebende Heizung erwärmt, wobei gegebenenfalls noch eine Zusatzheizung von unten vorgesehen ist. Im Außenbereich der Muffel besteht typischerweise ein erheblich größerer Temperaturgradient, gerade bei der angestrebten raschen Erwärmung der Muffel durch den Dentalofen.

Die so vorgeschlagene Erzeugung der Dentalrestauration hat aber zwei wesentliche Nachteile, so dass nicht verwunderlich ist, dass sich dieser Vorschlag nicht durchgesetzt hat: Zum einen lässt sich bei zentraler Anordnung mit einer Muffel lediglich eine einzige Dentalrestauration erzeugen, was extrem unwirtschaftlich ist. Zum anderen ist die Oberflächenqualität bei gepressten Dentalkeramiken deutlich besser und naturnäher.

WO 03/017864 A1, US 2008/142183 A1, US 2008/220395 A1 offenbaren Verfahren und Dentalkeramik-Erzeugungsvorrichtungen, wobei ein Zubringerkanal von einem Fachmann bestimmt werden soll. US 2008/153069 A1 offenbart ein Verfahren und eine Dentalkeramik-Erzeugungsvorrichtung, wobei ein Zubringerkanal senkrecht zu einer einzigen verlorenen Muffel von einem CAD-Software automatisch bestimmt wird.

Demgegenüber liegt der Erfindung die Aufgabe zugrunde, ein Verfahren zur Herstellung von Dentalrestaurationen sowie eine Dentalrestauration-Erzeugungsvorrichtung bereitzustellen, die die Erstellung von Dentalrestaurationen in hoher Qualität und sehr wirtschaftlich ermöglichen, wobei das Verfahren und die Vorrichtung gerade bei Verwendung von Lithiumdisilikat als Dentalkeramikmaterial besonders geeignet sein soll.

Diese Aufgabe wird erfindungsgemäß durch Anspruch 1 bzw. 18 gelöst. Vorteilhafte Weiterbildungen ergeben sich aus den Unteransprüchen.

Erfindungsgemäß ist es vorgesehen, über ein spezielles Modul der CAD-Software für die Erzeugung des Positivmodells jeder Dentalrestauration diese in einem virtuellen Raum innerhalb der Muffel zu erzeugen und die Position nach den in Anspruch 1 niedergelegten besonderen Kriterien festzulegen. Damit entsteht in überraschend einfacher Weise eine für eine Vielzahl von Zahnformen und Dentalrestaurationsarten geeignete Ausgestaltung von Positivmodellen, die sich über die Zubringerkanäle baumartig erstrecken. Der Presskanal bildet insofern im Grunde den Stamm dieses "Baumes", und die Zubringerkanäle bilden die Äste, an deren Spitze in der Regel je eine Dentalrestauration vorgesehen ist. Bevorzugt erstrecken sich sowohl jeder Zubringerkanal als auch jede Dentalrestauration selbst mit ihrer Hauptachse entlang einer Isotherme, was zu den geringsten Temperaturgradienten innerhalb des jeweiligen Hohlraums für die jeweilige Dentalrestauration beim Pressvorgang führt.

Durch die automatische Erzeugung jedes Zubringerkanals und jeder Dentalrestauration lassen sich die bislang auftretenden Fehler, die häufig zu Regressansprüchen gegenüber den Herstellern führten, vollständig vermeiden, und es lässt sich auch die Anzahl der gleichzeitig erzeugten Dentalrestaurationen optimieren.

Beispielsweise ist es möglich, einen Minimalabstand zwischen einander benachbarten Dentalrestaurationen zu definieren, beispielsweise 3 mm, und die Dentalrestaurationen durch die insofern per Rapid-Prototyping-erzeugten Positivmodelle im Raum gegeneinander versetzt und auf verschiedenen Ebenen kreisförmig anzuordnen, ohne dass die Gefahr eines Qualitätsverlustes besteht. Die insofern "mehrlagige Anordnung" von Dentalrestaurationen ist besonders bei neueren Pressöfen bevorzugt, die eine Bodenheizung für die Muffel aufweisen, durch welche die Isothermen der Muffel in einer anderen Weise verlaufen als bei einer reinen Ringheizung.

Erfindungsgemäß besonders günstig ist es, dass der Pressvorgang gerade auch bei einer Mehrzahl von parallel erstellten Dentalrestaurationen optimiert werden kann. So lässt sich durch Dimensionierung des jeweiligen Zubringerkanals der Strömungswiderstand des erhitzten Keramikmaterials, das für die Erstellung der Dentalrestaurationen verwendet wird, einstellen.

Die Einstellung erfolgt bevorzugt so, dass die Dentalrestaurationen, also die entsprechenden Hohlräume in der Muffel, gleichzeitig vollständig gefüllt sind. Bei kleineren Volumina der dentalen Restauration wird man dementsprechend einen dünneren und/oder längeren Zubringerkanal von dem Modul erzeugen lassen, und umgekehrt bei einer mehrgliedrigen Brücke mit entsprechend großem Volumen den oder die Zubringerkanäle kürzer und/oder dicker realisieren lassen.

Während bislang davon abgeraten wurde, unterschiedliche Dentalrestaurationen in dem gleichen Pressschritt zu erzeugen - insbesondere bei Silikatkeramiken -, ist es erfindungsgemäß ohne weiteres möglich, auch sehr große und sehr kleine Dentalrestaurationen gleichzeitig zu erzeugen, was erfindungsgemäß zur Effizienzsteigerung weiter beiträgt. Gerade Restaurationen aus Lithiumdisilikat mit dem sehr geringen Schrumpfmaß lassen sich so besonders rasch und wirtschaftlich bereitstellen.

Zu den Maßnahmen der erfindungsgemäßen Ausrichtung jeder Dentalrestauration (bzw. jedes Hohlraums bzw. des Positivmodells) gehört es, als Andockstelle des jeweiligen Zubringerkanals an der jeweiligen Dentalrestauration die Stelle mit der dicksten Wandstärke der jeweiligen Dentalrestauration auszuwählen und dann die Dentalrestauration so auszurichten, dass ihre Längsachse der Achse des Zubringerkanals entspricht. Diese Maßnahme führt überraschenderweise zu besonders günstig herzustellenden Dentalrestaurationen, die es erlauben, das Positivmodell generativ per Rapid-Prototyping zu erstellen, beispielsweise durch stereolithografische Verfahren, aber auch zu einer Blasenfreiheit.

Beim Vergießen des Positivmodells mittels flüssigem Vergußmaterial wie Gips besteht regelmäßig die Gefahr, dass Hohlräume verbleiben, die nicht mit Vergußmasse gefüllt werden; die insofern bestehende Gefahr ist mit der erfindungsgemäßen Ausrichtung minimiert.

Andererseits besteht beim Verpressen die Gefahr, dass Blasen in der Keramik verbleiben, die Qualitätseinbußen mit sich bringen; mit der erfindungsgemäßen Schrägstellung gepaart mit dem vorstehend genannten Merkmal ist auch diese Gefahr erfindungsgemäß minimiert.

Bevorzugt erstrecken sich die Zubringerkanäle schräg von dem Presskanal und seiner Achse weg und erstrecken sich insofern schräg durch die Muffel, da regelmäßig die Presskanalachse mit der Muffeldornachse zusammenfällt.

Erfindunsgemäß ist es auch vorgesehen, die Schrägstellung in gewisser Weise an die Art der Beheizung der Muffel anzupassen. Bei Bodenheizung der Muffel steht der gesamt mögliche Winkelbereich zwischen etwas mehr als 0° und 120° oder 130° bezogen auf die Achse der Muffel bzw. des Presskanals, zur Verfügung. Bei Ringheizungen ist es demgegenüber bevorzugt, die Achse in einem Winkel zwischen 40° und 65°, bevorzugt zwischen 45° und 60° zu halten, basierend auf dem engeren Bereich des isothermischen Korridors.

Erfindungsgemäß ist es besonders günstig, dass sich durch vorgegebene Abstandsgrenzen, also einen vorgegebenen Abstand zum Presskanal und einen vorgegebenen Abstand zur Außenwand der Muffel, aber auch nach oben und nach unten ein sogenannter virtueller Innenraum festlegen lässt, innerhalb derer das Modul die Dentalrestaurationen einschließlich der Zubringerkanäle anzuordnen hat. Hierdurch ist sichergestellt, dass es nicht durch zu geringe Wandstärken zu Muffelrissen kommt, aber auch, dass die Randbedingungen hinsichtlich der Isothermie eingehalten werden.

In diesem Zusammenhang versteht es sich, dass die mögliche Temperaturabgleichung innerhalb eines als isotherm bezeichneten Bereichs in starkem Maße von dem zu pressenden Keramikmaterial abhängt. Beispielsweise kann eine Feldspaltkeramik einen größeren Isothermiebereich bzw. Paramoi-Thermiebereich, also Bereich ähnlicher Temperaturen, aufweisen als eine Lithiumdisilikatkeramik. Auch diese Randbedingungen lassen sich durch das erfindungsgemäße Modul berücksichtigen, so dass ein Ebenenversatz mit der entsprechenden Verdichtung der Anordnung der Dentalrestaurationen in tangentialer Richtung betrachtet nicht nur bei Bodenheizungen der Muffel, sondern auch materialabhängig ist.

Erfindungsgemäß ist es auch günstig, die Anordnung und auch die Anzahl der Zubringerkanäle automatisch an die Art und Anzahl der Dentalrestaurationen anzupassen. Wenn beispielsweise eine achtgliedrige Brücke mit beispielsweise drei Zubringerkanälen, die an den je dicksten Stellen der betreffenden Zähne als Andockstelle enden, sich etwas gebogen erstreckt, kann der so entstehenden Bogeninnenraum für die Platzierung einer weiteren Dentalrestauration mit dem entsprechenden Zubringerkanal innerhalb des virtuellen Innenraums genutzt werden.

In vorteilhafter Ausgestaltung ist es vorgesehen, dass die Ausrichtung der Dentalrestaurationen dahingehend modifiziert wird, dass sie sich im Grunde nach wie vor in Verlängerung der Achse des Zubringerkanals erstreckt, und zwar im Wesentlichen mit der maximalen Länge der virtuellen Achse durch das Positivmodell, jedoch etwas abgekippt in Richtung der Primärströmungsrichtung, meist also in Okklusalrichtung. Hierdurch erfolgt eine etwas geringere Strömungsumlenkung an der Andockstelle, was die Neigung zur Blasenbildung weiter reduziert. Beispielsweise kann die Umlenkung der Primärströmungsrichtung aus den Zubringerkanals auf diese Weise von 30° auf 20° reduziert werden, so dass die Dentalrestauration gegenüber der Maximallänge der virtuellen Achse um 10° gekippt angeordnet ist.

In erfindungsgemäß bevorzugter Weise ist es vorgesehen, dass die Dentalrestaurationen um den Presskanal herum, jedoch von dessen Stirnfläche noch etwas beabstandet, angeordnet sind. Zwischen der Stirnfläche und den Dentalrestaurationen erstrecken sich dann je die von dem Modul festgelegt Zubringerkanäle, und das Modul verteilt die Dentalrestaurationen bevorzugt gleichförmig in diesem Bereich schräg vor der Stirnfläche des Presskanals. Wenn man die Dentalrestaurationen und Zubringerkanäle gedanklich miteinander verbindet, bilden sie insofern im Wesentlichen einen Kegel oder Kegelstumpf, mit der Stirnfläche als Stumpffläche und erstrecken sich recht wenig, noch im Isothermiebereich, aus der Kegelfläche heraus.

Eine achsensymentrische Anordnung der Muffel und des Presskanals ist hier erfindungsgemäß bevorzugt und für die Erreichung eines optimalen Pressergebnisses basierend auf der erfindungsgemäßen Ausgestaltung eigentlich unabdingbar. Jedoch ist die Muffel nicht auf eine zylindrische Muffel - wie sie am weitesten verbreitet ist - beschränkt; auch eine in der Seitenansicht birnenförmige oder in der Draufsicht kleeblattförmige Muffel ist im Grunde erfindungsgemäß einsetzbar.

Durch die in bevorzugter Ausgestaltung vorgesehenen stetigen Übergänge oder Radien zwischen den Zubringerkanälen und dem Presskanal einerseits, aber auch der Dentalrestaurationen andererseits wird verhindert, dass dort bestehendes Muffelmaterial beim Pressvorgang einem zu hohen Druck ausgesetzt wird und dementsprechend bricht. Derartige Strömungsübergänge sind zudem strömungstechnisch günstig und reduzieren den Gegendruck beim Pressen während der Umformung auf das erforderliche Minimalmaß.

Als zusätzlichen Gesichtspunkt für die Ausrichtung der Dentalrestaurationen, nämlich die Wahl der jeweiligen Andockstelle, kann das Modul berücksichtigen, dass die Durchtretungslänge durch die Dentalrestaurationen maximiert wird. Hierzu bildet die Software den kürzesten Vektor zur weitest entfernten Stelle der Dentalrestaurationen von der Andockstelle und maximiert diese Länge für die exakte Wahl der Andockstelle.

Die Ausrichtung jeder Dentalrestauration relativ zur jeweilen Zubringerkanalachse wird dann wieder so gewählt, dass die gedachte Achse zwischen dem Mittelpunkt der Andockstelle und der am weitesten entfernte Punkt der jeweiligen Dentalrestauration eine virtuelle Achse bilden, die sie in Verlängerung der Achse des jeweiligen Zubringerkanals erstreckt.

Auch diese Anordnung kann bevorzugt etwas in okklusaler/inzisaler Richtung verschoben werden, beispielsweise um 10° oder 15°, um die Strömungsumlenkung zu minimieren.

In erfindungsgemäß bevorzugter Weise ist es zudem vorgesehen, offene, also basalnahe Flächen jeder Dentalrestauration radial auswärts bezogen auf die Presskanalachse auzurichten. Diese Lösung ist sowohl hinsichtlich der Vermeidung der Bläschenbildung als auch hinsichtlich der Auswirkung von Temperaturgradienten günstig.

In vorteilhafter Ausgestaltung kann auch der Massenschwerpunkt der dicksten Stelle der Wand jeder Dentalrestauration bei der Bestimmung der Winkelausrichtung dieser bezogen auf die jeweilige Zubringerkanalachse hilfreich sein; jede Dentalrestauration lässt sich bevorzugt auch so ausrichten, dass die Verlängerung der jeweiligen Zubringerkanalachse durch diesen verläuft.

In weiterer vorteilhafter Ausgestaltung ist es vorgesehen, dass das Modul die Länge jedes Zubringerkanals in Abhängigkeit von dem Gesamtgewicht festlegt. Hierbei beträgt die Länge jedes Zubringerkanals bevorzugt stets deutlich weniger als die Länge der Haupterstreckungsrichtung durch die jeweilige Dentalrestauration und liegt - in Abhängigkeit von der Größe und dem Gewicht dieser - zwischen 30 % und etwa 70 % der Länge der Haupterstreckungsrichtung.

Die Zubringerkanäle können auch in einer Bibliothek abgespeichert sein, und das Modul kann dann auswählen, welcher der vorab vorliegenden Zubringerkanäle aus der Bibliothek zweckmäßig hier zum Einsatz kommt.

Während für die Realisierung des Positivmodells die Erstellung per Rapid-Prototyping bevorzugt ist, beispielsweise per Stereolithografie oder per FDM, ist es bei einfacher gestalteten und weniger komplexen Strukturen auch möglich, das Positivmodell per computergesteuertes Fräsen zu fertigen. Hierbei können an sich bekannte Rohlinge, beispielsweise aus einem Poylmer, Polyacryl oder Wachs, zum Einsatz kommen, die scheibenförmig mit einer Höhe von 20 mm oder 25 mm realisiert sind.

Anstelle dieses Flachzylinders kann auch ein aufrechter Zylinder als Fräsrohling realisiert werden, der dann beispielsweise eine Höhe von 50 mm haben kann.

Erfindungsgemäß besonders günstig ist es, dass durch entsprechende ofenbezogene Vorgabe das Modul einen Winkelkorridor für die Realisierung der Dentalrestaurationen bereitstellen kann, der es erlaubt, jede Dentalrestauration stets innerhalb eines isothermischen Korridors zu platzieren. Der insofern vorgegebenen virtuelle Raum ist in horizontaler Richtung zudem durch einen minimalen Randabstand von beispielsweise 10 mm zur Außenwand der Muffel, und auch zum Presskanal, der dem Muffeldorn entspricht, vorgegeben. Für die genauere Einstellung jedes Zubringerkanals berücksichtigt das Modul insbesondere auch das Volumen der je zugehörigen Dentalrestaurationen und stellt damit Länge und Dicke des jeweiligen Zubringerkanals basierend hierauf ein. Zudem lässt sich die Muffelgröße basierend auf der Anzahl der zu fertigenden Dentalrestaurationen festlegen, wobei die Standardgrößen 100 g, 200 g und 300 g von Muffeln mit entsprechenden bekannten Abmessungen bereitgehalten werden können.

In vorteilhafter Ausgestaltung ist es hierbei vorgesehen, bei nur sehr wenigen zu fertigenden Dentalrestaurationen einen Zubringerkanal als Blindkanal zu realisieren. Dieser dient dazu, einen abrupten Druckanstieg beim Pressende abzumildern, um die Gefahr eines Muffelrisses weiter zu reduzieren.

In einer weiteren vorteilhaften Ausgestaltung ist es vorgesehen, die Zubringerkanalbasis standardisiert vorzusehen. Diese kann einen Vorsprung aufweisen, der formschlüssig mit dem Muffeldorn in Eingriff steht und als Nullpunkt des virtuellen Innenraums für die Bereitstellung der Zubringerkanäle in der Zubringerkanal-Bibliothek abgespeichert ist. Beispielsweise kann hierzu die Muffelbasis, nämlich der aus der scheibenförmigen Basis emporragender Muffelzapfen, mittig eine Ausnehmung aufweisen, die formschlüssig den entsprechenden Vorsprung der Zubringerkanalbasis aufnimmt.

An der Zubringerkanal-Basis wird dann bevorzugt einer Zubringerkanal oder die Mehrzahl von Zubringerkanälen aufgebaut. Die Zubringerkanal-Basis ist insofern eine Scheibe, die mit einem Formschlusselement, beispielsweise einem Vorsprung versehen ist, der mit dem Muffeldorn in Eingriff stehen kann, oder eine sonstige Verbindung ermöglicht.

Alternativ kann auch eine Schürze am Außenumfang der Zubringerkanal-Basis vorgesehen sein, der den Muffeldorn umschließt.

Von der Oberfläche der Zubringerkanal-Basis erstreckt sich der Zubringerkanal oder die Mehrzahl von Zubringerkanälen schräg seitlich weg. Der Winkel der Zubringerkanal-Achse wird gemäß den vorstehenden Vorgaben realisiert, und die erwünschten Randabstände, also die Abstände zwischen den Dentalrestaurationen einerseits und den Rändern der Muffel andererseits, lassen sich durch die nach den Vorgaben bestimmte Wahl des Ortes des Ansatzpunktes des Zubringerkanals auf der Zubringerkanal-Basis einstellen.

Bei einer Schrägstellung jedes Zubringerkanals von 45° lässt sich beispielsweise die vertikale Position der jeweiligen Dentalrestauration dadurch erhöhen, dass der Ansatzpunkt des Zubringerkanals radial einwärts verlagert wird. Hierdurch wird der Zubringerkanal gleichsam automatisch - konstanten Winkel vorausgesetzt - länger. Die strömungstechnischen Effekte dieser Verlängerung lassen sich aber wiederum durch eine Vergrößerung des Durchmessers des Zubringerkanals erfindungsgemäß kompensieren.

Basierend auf dem hinsichtlich der isothermen Korridore optimierten Zubringerkanalwinkel können dementsprechend erfindungsgemäß jede Dentalrestauration in der Seitenansicht betrachtet abwechselnd eine größere und eine geringere vertikale Höhe aufweisen, um so einen raumoptimierten Baum von Dentalrestaurationen bereitzustellen.

Weitere Vorteile, Einzelheiten und Merkmale der Erfindung ergeben sich aus der nachstehend Beschreibung mehrerer Ausführungsbeispiele anhand der Zeichnungen.

Es zeigen:
- Fig. 1: eine schematische Ansicht eines Positivmodells einer Dentalrestauration, zusammen mit dem bereits automatisch von einem Modul einer CAD-Software erzeugten Zubringerkanal, der von einem Presskanal ausgeht;
- Fig. 2: eine modifizierte Ausgestaltung des Positivmodells der Dentalrestauration gemäß Fig. 1, mit einem anderen Winkel des Zubringerkanals;
- Fig. 3: eine dritte beispielhafte Version einer Dentalrestauration bzw. eines Positivmodells, die unter Verwendung eines erfindungsgemäßen Verfahrens hergestellt wird;
- Fig.4: eine modifizierte Ausgestaltung der Herstellung gemäß Fig. 3;
- Fig. 5: eine schematische Darstellung eines mit Zubringerkanälen versehenen Positivmodells für die Verwendung in einer erfindungsgemäßen Dentalrestauration-Erzeugungsvorrichtung ;
- Fig. 6: eine weitere Darstellung eines Positivmodells für die Verwendung in einer erfindungsgemäßen Dentalrestauration-Erzeugungsvorrichtung;
- Fig. 7: eine schematische Darstellung der Ausrichtung des Positivmodells in einem erfindungsgemäßen Verfahren;
- Fig. 8: eine schematische Darstellung der Ausrichtung eines weiteren Positivmodells und zusätzlich dessen Lage im virtuellen Raum; und
- Fig. 9: eine schematische Darstellung eines weiteren Positivmodells und dessen Zubringerkanäle, einschlißelich deren Lage im virtuellen Raum.

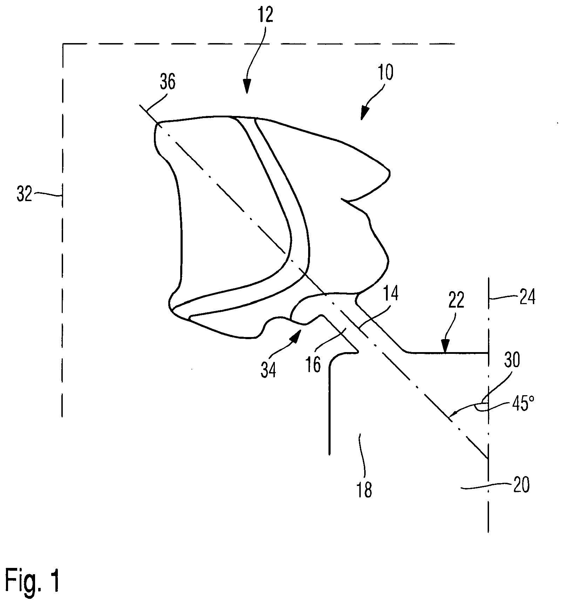

In Fig. 1 ist ein Positivmodell 10 einer Dentalrestauration 12 zusammen mit deren Lage im Raum dargestellt. Wie ersichtlich ist, erstreckt sich eine Achse 14 eines Zubringerkanals 16 quer durch das Positivmodell 10 hindurch, ausgehend von einem Muffeldorn 18 bzw. Presskanal 20, genauer gesagt, von deren Stirnfläche 22 ausgehend, und zwar in einem vorgegebenen Winkel zu einer Achse 24 des Muffeldorns 18 bzw. Presskanals 20, der hier 45° beträgt.

Anhand dieser Darstellung seien nun die wesentlichen Schritte des erfindungsgemäßen Verfahrens erläutert.

Für die Realisierung des erfindungsgemäßen Verfahrens wird zunächst die Zahnposition der Dentalrestauration oder der Dentalrestaurationen erfasst. Hierzu gehört die Zahnposition im Mund, also z. B. 21, 22 usw. zu dem die Art und Anzahl der Dentalrestaurationen - also z. B. Brücke, Krone, Inlay, Veneer, Prefacette usw. -, aber auch das Presskonzept. Zu diesem gehört auch das Pressprogramm für das spätere Pressen in dem Pressofen; dieses wird in der erfindungsgemäßen Dentalrestauration-Erzeugungsvorrichtung über einen Menüpunkt ausgewählt. Mit dieser Wahl kann optional festgelegt werden, ob der Dentalofen beispielsweise eine standardmäßige Ringheizung oder eine zusätzliche Bodenheizung der Muffel aufweist, die je andere Winkelvorgaben des Winkels 30 der Achse 14 zur Achse 24 umfassen.

Basierend auf diesem Presskonzept wird zudem eine entsprechende Bibliothek von Zubringerkanälen - einschließlich deren möglicher Winkel - angeboten.

Mit der Festlegung des Presskonzepts ergibt sich auch die Materialwahl der zu verwendenden Keramik (beispielsweise Oxid- oder Silikatkeramik).

Vor oder gegebenenfalls auch nach diesen Festlegungen wird die Dentalrestauration passend zu ihren Nachbarzähnen in ihrer Form, Anordnung im Mundraum und so weiter festgelegt, basierend auf einem digitalen Scan des Mundes des Patienten. Hieraus wird automatisch das Volumen der jeweiligen Dentalrestauration berechnet, woraus sich auch das Gesamtvolumen der erfindungsgemäßen gleichzeitig zu erzeugenden Dentalrestaurationen ergibt.

Auch die Lage der Dentalrestauration bezogen auf die Nachbarzähne wird von der CAD-Software festgelegt, also in mesial/distaler Richtung, in okklusal/zervikaler Richtung, in der Drehposition um die Zahnachse und so weiter. Hierzu gehört auch der Verlauf der Wandstärke der Dentalrestauration bzw. des Positivmodells.

Nachdem nach dem Gesamtgewicht die Größe der Muffel festgelegt ist, wird erfindungsgemäß basierend auf einem besonderen Modul der CAD-Software die Lage des Positivmodells 10 in einem virtuellen Raum 32 festgelegt.

Im Beispiel 2 sei das Gesamtvolumen 1,9 cm³, so dass eine Muffel von 200 g ausreichend ist; zu dieser gehört eine entsprechende Muffelbasis mit einem entsprechenden Muffeldorn 18.

Von dem Gesamtgewicht habe das Positivmodell 10 gemäß Fig. 1 einen Anteil von 0,4 cm³, während insgesamt 6 weitere Positivmodelle, die hier nicht dargestellt sind, sich im virtuellen Raum 32 in entsprechender Ausrichtung zu der Ausrichtung des Positivmodells 10 kreisförmig bzw. kegelförmig von dem Muffeldorn 18 ausgehend um diesen herum erstrecken.

Im dargestellten Ausführungsbeispiel ist das Presskonzept für einen Pressofen mit Ringheizung bestimmt; hierdurch ist der mögliche Bereich des Winkels 30 auf Werte zwischen beispielsweise 25° und 50° beschränkt, und der virtuelle Raum 32 dementsprechend gegenüber einem Ofen mit Bodenheizung kleiner.

Das Modul erzeugt nun basierend auf einem Randabstand zum Rand der Muffel von beispielsweise 10 mm eine optimierte Anordnung der Positivmodelle 10 im Raum. Durch Verlängerung der Zubringerkanäle 16 werden die Dentalrestaurationen 12 weiter zum Außenumfang verlagert, jedoch unter Beachtung der Randabstände. Der Abstand von der Stirnfläche 22 zum oberen Ende des virtuellen Raums 32 ist im Beispielsfall ebenfalls beschränkt, hier auf 16 mm, und als Vorgabelänge für die Länge des Zubringerkanals werden 3 mm bis 8 mm vorgegeben. Die Gesamtlänge der Dentalrestauration 12 entlang der Achse 14 und einschließlich der Länge des Zubringerkanals 16 beträgt gemäß der Vorgabe per Softwaremodul in diesem Ausführungsbeispiel 16 mm, und der Minimalabstand der Dentalrestaurationen 12 zueinander beträgt 3 mm.

Durch die Wahl des Winkels 30 ergibt sich die Primäranordnung innerhalb eines thermischen Korridors, der einen ähnlichen Temperaturbereich aufweist. Hierzu trägt auch die Ausrichtung der Dentalrestauration 16 bezogen auf die Achse 14 bei, aber auch die Wahl der Andockstelle 34. Der Winkel 30 wird entsprechend der Ausrichtung des isothermischen Korridors ofenspezifisch festgelegt.

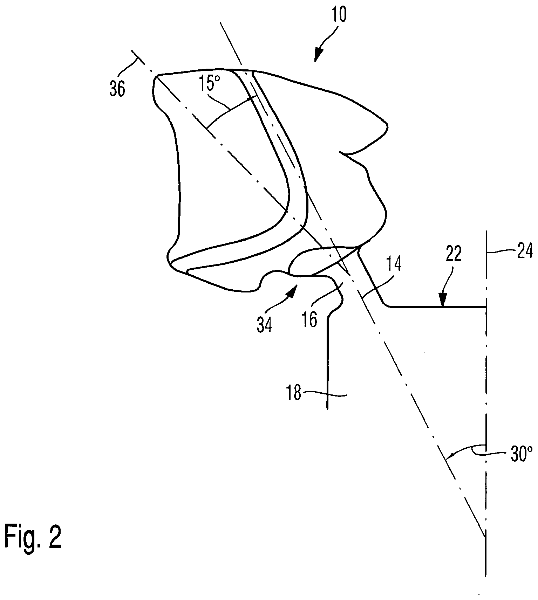

In dem dargestellten Ausführungsbeispiel ist die Andockstelle 34 dort gewählt, wo die Wandstärke des Positivmodells 10 bzw. der Dentalrestauration 12 maximal ist, im Beispielsfall an einem mesiobukkalen Höcker. Die Ausrichtung der Dentalrestauration 12 bezogen auf die Achse 14 erfolgt nun so, dass eine virtuelle Achse 36 der Dentalrestauration, die sich durch diese von der Stelle der dicksten Wandstärke bis zur am weitesten entfernten Stelle der Dentalrestauration, also der maximalen Längserstreckung dieser, erstreckt, mit der Achse 14 des Zubringerkanals 16 zusammenfällt und sich insofern in Verlängerung dieser erstreckt. Wie aus Fig. 2 im Vergleich mit Fig. 1 ersichtlich ist, ist hiermit keine koaxiale, also exakt zusammenfallende Anordnungen gemeint, sondern eine Verlängerung, beispielsweise mit einer möglichen Winkelabweichung von 15°, wobei hinsichtlich der Optimierung insofern auf die nachfolgende Erläuterung verwiesen wird.

Basierend auf den insofern bestehenden Randbedingungen wird nun ein Zubringerkanal 16 aus der Bibliothek der Zubringerkanäle ausgewählt, und über das Modul wird damit die Gesamtanordnung der Positivmodelle 10 einschließlich der Zubringerkanäle 16 festgelegt.

In einem Formungsschritt wird nun per Rapid-Prototyping die Gesamtanordnung der Positivmodelle 10 und Zubringerkanäle 16 erzeugt, die - zumindest im vorliegenden Fall - eine baumförmige Anordnung hat.

Die Erstellung der Positivmodellanordnung erfolgt in einem rückstandsfrei entfernbaren Material wie Polyacryl, oder aber auch einem beliebigen anderen geeigneten Polymer, das für die Rapid-Prototyping-Bearbeitung geeignet ist und sich durch eine besonders gute Formtreue auszeichnet.

Bei der Verwendung der Stereolithografie-Technik lässt sich so eine Genauigkeit der Erstellung von beispielsweise 50 µm sicherstellen, die allen Anforderungen entspricht.

Wie aus Fig. 1 ersichtlich ist, erstreckt sich die basale Fläche des Objektes nach unten/außen, bezogen auf den Muffeldorn 18. Die Anordnung der Dentalrestaurationen 12 bzw. Positivmodelle 10 in der Draufsicht von oben erfolgt nach dem Tortenprinzip, so dass die kleinste Breite der Positivmodelle 10 innen, also der Presskanalachse 24 zugewandt ausgerichtet ist.

Die Grundausrichtung der Positivmodells 10 erfolgt in Fließrichtung, also entsprechend der Verlängerung der Achse 14.

Gemäß Fig. 2 ist die virtuelle Achse 36 der Dentalrestauration etwas schräg zu der Achse 14 des Zubringerkanals 16. Hiermit wird einer Minimierung der Strömungsumlenkung Rechnung getragen, so dass die Hauptströmung des fließfähigen Dentalmaterials durch den entsprechenden Hohlraum hindurch knapp unterhalb der Längsfissur des dortigen Molars erfolgt, aber jedenfalls einer der okklusalen Richtung stärker angenähert als es aus Fig. 1 ersichtlich ist. In der aus den Figuren 1 und 2 nicht ersichtlichen Richtung, also quer zur Zeichnungsebene, erfolgt die Ausrichtung so, dass je die Hauptströmungsrichtung jedenfalls durch die Kronenmitte verläuft.

Wie aus Fig. 2 ebenfalls ersichtlich ist, erstreckt sich der Zubringerkanal 16 von einer recht weit außen liegenden Stelle der Stirnfläche 22 ausgehend. Er ist recht kurz, im Beispielsfalle lediglich 3 mm, wobei es sich versteht, dass auch eine größere Länge des Zubringerkanals möglich ist, wenn mehr Objekte in dem virtuellen Raum 32 untergebracht werden sollen.

Größere Längen der Zubringerkanäle weisen bekanntlich einen größeren Strömungswiderstand aufgrund der bestehenden Wandreibung auf. Um dies zu kompensieren, wird gemäß den Vorgaben der Zubringerkanal-Bibliothek dann der Durchmesser des Zubringerkanals vergrößert.

Während die Positionierung gemäß den Figuren 1 und 2 vorsieht, die Okklusalfläche innen, also der Presskanalachse 24 benachbart anzuordnen, und dementsprechend die Basalfläche nach außen/unten, ist es auch möglich, diese Anordnung umzukehren. Diese alternative Anordnung ist insbesondere bei einer reinen Ringheizung des Pressofens gegebenenfalls günstig, da dann der Bereich größerer Masse der Dentalrestauration im Bereich höherer Temperaturen liegt. Zudem ist die Neigung der Muffel zur Rissbildung dann geringer, wenn sich wandparallel runde Flächen erstrecken, und jedenfalls keine scharfen Kanten.

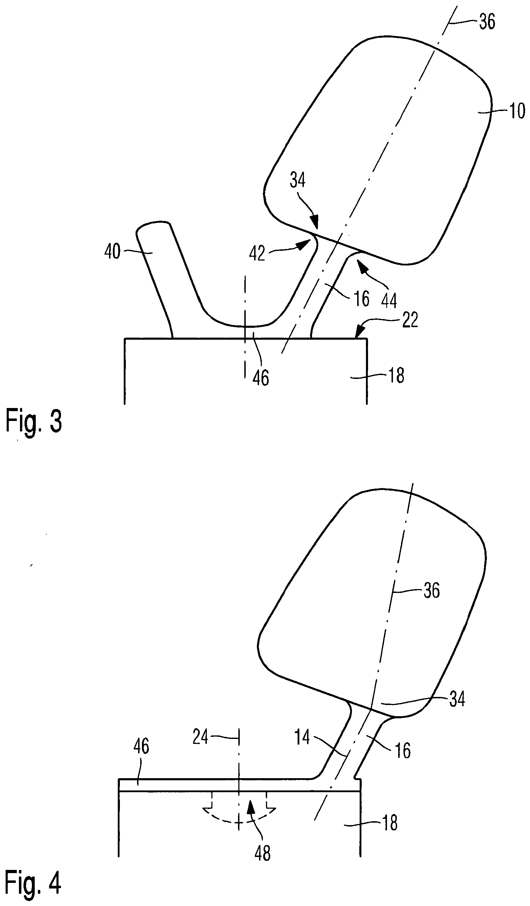

Aus Fig. 3 ist ersichtlich, in welcher Weise sich eine Frontzahnkrone erstrecken kann. Bei dieser Lösung ist lediglich eine einzige Dentalrestauration in einer 100 g Muffel vorgesehen, und aufgrund des geringen Gesamtvolumens von lediglich 0,3 cm³ ist es vorgesehen, einen Blindkanal 40 als zusätzlichen Zubringerkanal 16 zu realisieren, der sich - ebenfalls per Rapid-Prototyping erstellt - zum Zubringerkanal 16 der Dentalrestauration 10 erstreckt.

Aus Fig. 3 und - weiteren Figuren - ist auch ersichtlich, dass eingangsseitig des Positivmodells Radien 42, 44 vorgesehen sind, die strömungstechnisch günstig sind und auch verhindern, dass Gipsstege, die ansonsten dort bestehen würden, durch den Pressdruck abbrechen und die Dentalrestauration verunreinigen würden.

Wie aus Fig. 3 ersichtlich ist, ist auf der Stirnfläche 22 des Muffeldorns 18 eine Zubringerbasis 46 ausgebildet, die ebenfalls per Rapid-Prototyping erzeugt wird. Die Zubringerbasis 46 stellt die Verbindung zwischen den verschiedenen Zubringerkanälen 16 her, und liegt zugleich an der Stirnfläche 22 an oder ist dort über formschlüssige Mittel oder über eine Klebeverbindung verankert.

Die Andockstelle 34 ist bei der Anordnung gemäß Fig. 3 im Inzisalbereich etwa mittig vorgesehen. Hierdurch ergibt sich eine maximierte Länge der virtuellen Achse 36 dergestalt, dass sich diese im Wesentlichen in der Verlängerung der Achse 14 erstreckt.

In diesem Ausführungsbeispiel wird für das Rapid-Prototyping bevorzugt die Stereolithographie verwendet. Diese erlaubt keine Negativschichten, so dass aus technischen Gründen eine Verlagerung des Zubringerkanals 16 radial nach außen - bezogen auf die Achse 24 - erfolgt. Die Andockstelle 34 ist hierdurch im Vergleich zu Fig. 3 in den Approximalbereich hin verlagert, und die Achse 36 erstreckt sich schräger als bei Fig. 3 zu der Achse 14 des Zubringerkanals 16.

Aus Fig. 4 ist eine dementsprechend verbreiterte Zubringerbasis 46 ersichtlich, und auch in welcher Weise das Material der Zubringerbasis 46 eine Ausnehmung 48 in dem Muffeldorn 18 durchtreten und hintergreifen kann, um eine sichere Verankerung der Zubringerbasis 46 zu realisieren.

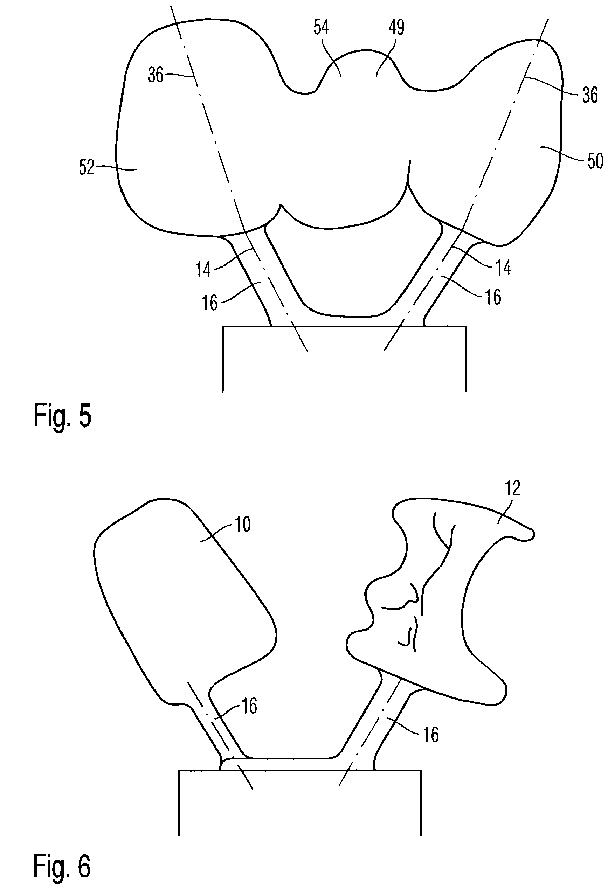

In Fig. 5 ist die Anordnung einer Brücke 49 als Dentalrestauration dargestellt. Die Zubringerkanäle 16 erstrecken sich zu den Pfeilerzähnen 50 und 52 in dessen Okklusalbereich, während das Brückenglied 54 frei von Zubringerkanälen bleibt.

Auch hier erstrecken sich die virtuellen Achsen 36 durch die längstmögliche Erstreckung der Pfeilerzähne 52 in der Verlängerung der Achsen 14 der Zubringerkanäle 16. Aufgrund des höheren Volumens der Dentalrestauration bzw. deren Gewicht kommt hier nur die Verwendung einer 200 g Muffel in Betracht, und die Zubringerkanäle sind im Hinblick auf die voluminösere Dimensionierung auf 5 mm verlängert.

Die Realisierung einer Brücke schließt nicht aus, dass gleichzeitig und in der gleichen Muffel Einzelzahn-Dentalrestaurationen bzw. deren Positivmodelle geformt sein können; so kann beispielsweise auch die Dentalrestauration 12 gemäß Fig. 6 an einer anderen Winkelstellung als die Brücke 49 gemäß Fig. 5 gleichzeitig ausgebildet werden.

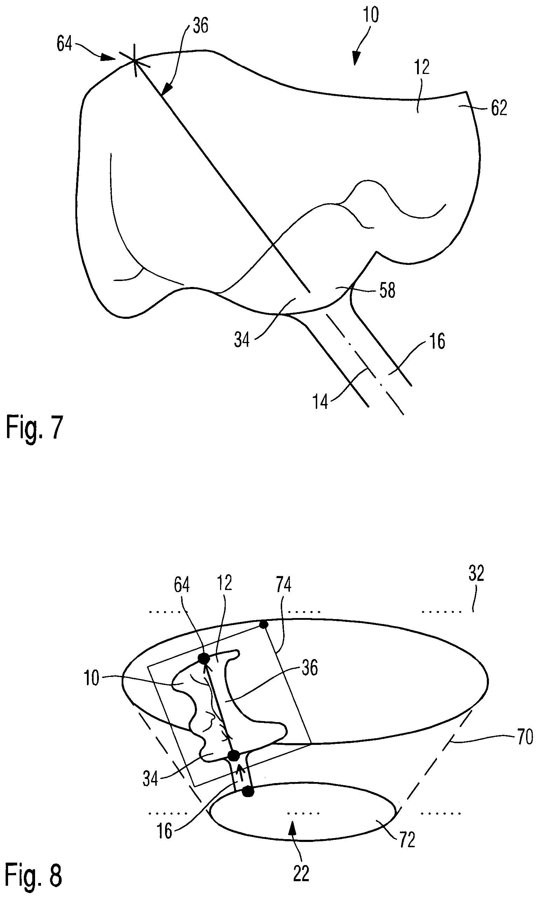

Aus Fig. 7 ist eine weitere Anordnung einer Dentalrestauration 12, nämlich einer Seitenzahnkrone, im Verhältnis zu deren Zubringerkanal 16 ersichtlich.

Als Andockstelle 34 werden mesiopalatinale Höcker 58 ausgewählt und das Modul der CAD-Software dreht die Dentalrestauration 12 bzw. das Positivmodell 10 nun so, dass die Länge L der virtuellen Achse 36 durch die Dentalrestauration 12 maximiert wird.

Beim Einströmen des Dentalmaterials erfolgt das Befüllen von der Andockstelle her in Strömungsrichtung im Wesentlichen mit einer gleichmäßigen Dentalmaterialfront. Dies führt dazu, dass der basale Bereich 62 mit Dentalmaterial gefüllt ist, bevor der am weitesten von der Andockstelle 34 entfernte, ebenfalls basale Bereich 64, der jedoch etwas zervikaler angeordnet ist, gefüllt wird.

Die Dentalkeramikfront erfährt daher zunächst im Bereich 62 einen Widerstand, der dann allmählich zunimmt, bis auch der Bereich 64 gefüllt ist. Diese etwas vergleichmäßigte Druckzunahme ist aus zwei Gründen günstig: zum einen erlaubt sie eine Druckreduktion knapp, bevor die tatsächliche Befüllung stattgefunden hat, um eine abrupte Druckspitze bei Befüllungsende zu vermeiden. Zum anderen ist die Gefahr von Muffelrissen aufgrund eines Druckstoßes bei Füllende reduziert, so dass das Füllende vergleichmäßigt wird.

Aus Fig. 8 ist ersichtlich, in welcher Weise sich eine weitere Dentalrestauration 12 im Raum erstrecken kann. Es ist ein kegelförmiger isothermischer Korridor 70 schematisch dargestellt, innerhalb dessen sich die Vielzahl von Dentalrestaurationen 12, von denen in Fig. 8 eine dargestellt ist, erstrecken. Die Stirnfläche 22 ist dem unteren Ende 72 des Korridors 70 benachbart, und das obere Ende wird von dem oberen Ende des virtuellen Raums 32 gebildet.

Um jede Dentalrestauration 12 erstreckt sich ein Hüllraum 74, der der Abstandswahrung dient und verhindert, dass die Dentalrestauration 12 zu nahe an benachbarte Dentalrestaurationen gerückt wird. Dieser ist in Fig. 8 schematisch als Rechteck dargestellt, in der Praxis jedoch der kleinstmögliche Raum, der einen Abstand von 3 mm oder 2 mm zur Dentalrestauration 12 einhält.

Wie aus Fig. 8 mit dem dort als Inlay ausgebildeten Positivmodell 10 ersichtlich ist, ist die Andockstelle 34 im oberen Drittel an der dicksten Stelle des Inlays angesetzt. Die Achse 36 ist unter Maximierung der Länge L in Verlängerung einer hier nicht dargestellten Achse des Zubringers 16 angeordnet. Die Fließrichtung der Dentalkeramikfront verläuft approximal mittig der Zentralfissur.

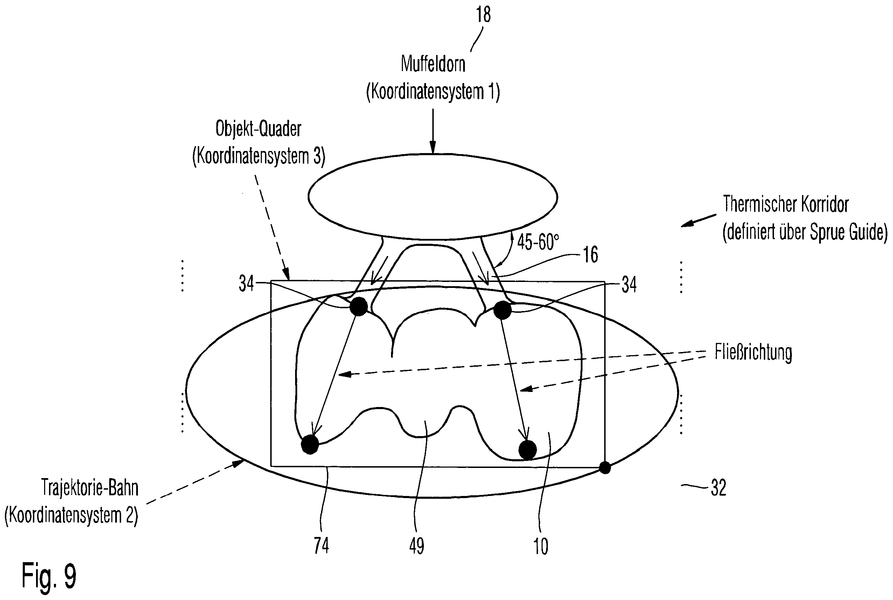

Aus Fig. 9 ist beispielhaft eine entsprechende Ausrichtung einer Seitenzahn-Krone 49 unter Verwendung von drei Koordinatensystemen ersichtlich.

Basierend auf dem Muffeldorn 18, der die Basis des ersten Koordinatensystems bildet, wird von dem Modul ein isothermischer Korridor berechnet, als Trajektoriebahn, an der entlang sich die Dentalrestaurationen 12 erstrecken sollen. Zugleich sind die Anordnungsmöglichkeiten der Dentalrestaurationen durch den virtuellen Raum 32 beschränkt.

Von dem Muffeldorn 18 ausgehend erstrecken sich die Zubringerkanäle 16 in einem Winkel von 45° bis 60° zur Horizontalen, da hier eine Ringheizung eingesetzt wird.

Das dritte Koordinatensystem wird über den Hüllraum 74 der Krone 49 aufgespannt, der wiederum hier als Rechteck dargestellt ist, aber tatsächlich eine Umhüllende der Dentalrestauration ist.

Die Fließrichtung L der Dentalkeramik durch die von dem Positivmodell 10 geschaffenen Hohlräume ist in der Verlängerung der Achsen der Zubringerkanäle 16, jedoch in einem Winkel von 12° gegenüber diesen abgewinkelt.

Bei der Brücke erfolgt die Anstiftung in an sich bekannter Weise an den inzisalen Flächen, und zwar wiederum an der dicksten Stelle jeder Krone, die die Andockstelle 34 bildet.

In dem dargestellten Ausführungsbeispiel beträgt die Länge der Zubringerkanäle 16 etwa die Hälfte der Länge L der virtuellen Achse 36. Es versteht sich, dass dieser Wert in weiten Bereichen an die Erfordernisse anpassbar ist und bei kleineren Dentalrestaurationen tendenziell etwas größer und bei größeren etwas geringer ist.

## Patentansprüche

1. Verfahren zur Herstellung von mehreren Dentalrestaurationen,
- bei welchem basierend auf einem Scanergebnis einer Mundsituation per CAD-Software eine Dentalrestauration (12) entworfen und in einem rückstandsfrei entfernbaren Material wie Wachs oder Polyacryl, in einem Formungsschritt, als Positivmodell (10) per Abtragen oder generativ, beispielsweise per Rapid Prototyping, erzeugt wird,
- welches Positivmodell (10) in an sich bekannter Weise über eine Muffel abgeformt und entfernt wird, und welche Muffel mit einem Presskanal (20) versehen ist, der über einen Zubringerkanal (16) mit einem dem Positivmodell (10) entsprechende Hohlraum für die Dentalrestauration (12) verbunden ist,
wobei der in den Presskanal (20) eingebrachte Rohling erwärmt und unter Druck gesetzt wird, so dass er sich verformt und Dentalmaterial zur Bildung der Dentalrestaurationen (12) durch die Zubringerkanäle (16) hindurch in den Hohlraum einfließt und diesen füllt, wobei
- beim Formungsschritt oder im Anschluss an diesen basierend auf den Abmessungen der Muffel im Verhältnis zur Größe und Gestalt des Positivmodells (10) oder der Positivmodelle (10) durch ein Modul der CAD-Software für jedes Positivmodell (10) mindestens ein der Zubringerkanäle (16) automatisch erzeugt wird,
- wobei das Modul einen virtuellen Innenraum innerhalb der Muffel für die Anordnung der Dentalrestaurationen (12) in dieser festlegt, wobei
- die Zubringerkanäle (16) mit dem Presskanal (20) derart verbunden sind, dass diese eine baumartige Anordnung bilden, bei welcher der Presskanal (20) den Baumstamm bildet und die Zubringerkanäle (16) die Äste bilden, an deren Spitze eine der Dentalrestaurationen (12) vorgesehen ist, wobei sich der jeweilige Zubringerkanal (16) in einem Winkel (30) zwischen mehr als 0° und 130°, bezogen auf die Achse (24) des Presskanals (20), schräg von diesem wegerstreckt, im Wesentlichen entlang einer Isotherme in der Muffel, und wobei durch Dimensionierung des jeweiligen Zubringerkanals (16) der Strömungswiderstand eines als Dentalmaterial verwendeten Keramikmaterials eingestellt wird,
- wobei als eine Andockstelle (34) des jeweiligen Zubringerkanals (16) an der entsprechenden Dentalrestauration (12) die Stelle mit der dicksten Wandstärke des Positivmodells (10) ausgewählt wird und das Modul das Positivmodell (10) bezogen auf den jeweiligen Zubringerkanal (16) so ausrichtet, dass es sich in Verlängerung der Achse (14) des jeweiligen Zubringerkanals (16) erstreckt und die Länge einer virtuellen Achse (36) durch das jeweilige Positivmodell (10) maximiert wird.

2. Verfahren nach Anspruch 1, wobei die Länge und Dicke jedes Zubringerkanals (16) relativ zu den anderen Zubringerkanälen so eingestellt ist, dass er dem Volumen seiner zugehörigen Dentalrestauration (12) angepasst ist, und zwar so, dass beim Pressen die vollständige Befüllung der Dentalrestauration (12) gleichzeitig erfolgt, dass also Zubringerkanäle für größere Dentalrestaurationen (12) auf einen geringeren Strömungswiderstand und Zubringerkanäle für kleinere Dentalrestaurationen (12) auf einen größeren Strömungswiderstand eingestellt sind und dass insbesondere die Strömungswiderstände der Zubringerkanäle je proportional zu dem Gewicht der zugehörigen Dentalrestaurationen (12) gewählt sind.

3. Verfahren nach einem der Ansprüche 1 oder 2, wobei das Modul basierend auf der Form der I jeweiligen Dentalrestauration (12) und damit des jeweiligen Positivmodells (10) ausgehend von der dicksten Stelle, also der Stelle mit der größten Wandstärke dieses eine Primärströmungsrichtung für das Dentalmaterial als diejenige Richtung festlegt, in welcher der Strömungsquerschnitt in einem vorgegebenen Abstand von der dicksten Stelle am größten ist, und dass die längste virtuelle Achse (36) durch das Positivmodell (10) in Verlängerung der jeweiligen Zubringerkanalachse gemäß Anspruch 1, jedoch in Richtung der Primärströmungsrichtung abweichend, festgelegt wird.

4. Verfahren nach einem der vorhergehenden Ansprüche, wobei die Ausrichtung jeder Dentalrestauration (12) selbst und damit des jeweiligen Positivmodells (10) selbst innerhalb der Muffel von dem Modul so festgelegt wird, dass ihre größte Längserstreckung sich im Wesentlichen entlang einer Isotherme erstreckt.

5. Verfahren nach einem der vorhergehenden Ansprüche, wobei die gleichzeitige Herstellung mehrerer Dentalrestaurationen (12) im Wesentlichen entlang der Hüllkurve eines Kegels und gleichmäßig verteilt um den Presskanal (20), der im Wesentlichen an der Spitze dieses Kegels endet, angeordnet sind.

6. Verfahren nach einem der vorhergehenden Ansprüche, wobei die Zubringerkanäle sowohl eingangsseitig, also zum Presskanal (20) hin, also auch ausgangsseitig, also zur Dentalrestauration (12) hin, mit Radien (42, 44) und/oder stetigen Übergängen versehen sind.

7. Verfahren nach einem der vorhergehenden Ansprüche, wobei jeder Zubringerkanal (16), der von dem Modul festgelegt wird, mit seiner durch die jeweilige Dentalrestauration (12) verlängerten Achse (14, 24) die Ausrichtung der jeweilige Dentalrestauration (12) bestimmt und dass die Ausrichtung der jeweilige Dentalrestauration (12) so gewählt ist, dass die Durchtretungslänge des jeweiligen verlängerten Zubringerkanals (16) durch die I jeweilige Dentalrestauration (12) hindurch maximiert wird.

8. Verfahren nach einem der vorhergehenden Ansprüche, wobei eine der Dentalrestaurationen (12) als Krone oder Brücke (49) ausgebildet ist und die Basalfläche der Krone (49) sich in Verlängerung einer Presskanalachse (24) mit ihrer offenen Seite von dem Presskanal (20) weg erstreckt.

9. Verfahren nach Anspruch 5 oder 6, wobei eine der Dentalrestaurationen (12) als Prefacette oder Veneer ausgebildet ist und die Basalfläche der Prefacette oder des Veneers sich bezogen auf eine Presskanalachse (24) nach radial auswärts weisend erstreckt.

10. Verfahren nach einem der vorhergehenden Ansprüche, wobei die Ausrichtung jeder Dentalrestauration (12) gegenüber der jeweiligen Zubringerkanalachse so gewählt ist, dass sich die Verlängerung der jeweiligen Zubringerkanalachse durch die jeweilige Dentalrestauration (12) bei Anordnung der jeweiligen Zubringerkanalachse an der dicksten Stelle der jeweiligen Dentalrestauration (12) durch den Massenschwerpunkt der I jeweiligen Dentalrestauration (12) verläuft.

11. Verfahren nach einem der vorhergehenden Ansprüche, wobei das Modul den jeweiligen Zubringerkanäl (16) bezogen auf die Außenflächen der jeweiligen Dentalrestauration (12) außermittig anschließt, insbesondere im Wesentlichen in Verlängerung einer Labial- oder Bukkalfläche.

12. Verfahren nach einem der vorhergehenden Ansprüche, wobei die Länge jedes Zubringerkanals (16) durch das Modul in Abhängigkeit von der Größe und dem Gewicht der jeweiligen Dentalrestauration (12) festgelegt wird, insbesondere bei größeren Dentalrestaurationen (12) wie Molaren, Kronen (49) oder Oberkiefer-Frontzahnkronen mit einer Länge von 30 % bis 50 % der Länge der Haupterstreckungsrichtung der Dentalrestauration (12) und bei kleineren Dentalrestaurationen (12) wie Unterkiefer-Frontzahnkronen mit einer Länge von 40 % bis 65 % der Länge der Haupterstreckungsrichtung der Dentalrestaurationen (12).

13. Verfahren nach einem der vorhergehenden Ansprüche, wobei das Modul bei der Anordnung von mehreren Dentalrestaurationen (12) in einer Muffel die Zubringerkanäle zu diesen so festlegt, dass die Dentalrestaurationen (12) in einem gleichmäßigen Abstand angeordnet sind, und zwar in einem isothermischen Korridor, und bei Bildung von gedachten Verbindunglinien zwischen diesen einem Kegel nahe kommendes Polyeder aufspannen.

14. Verfahren nach einem der vorhergehenden Ansprüche, wobei das Modul auf eine Zubringerkanalbibliothek zugreift, die verschiedene Profildesigns, Längen, Andockpunkte und Winkel (30) von Zubringerkanälen basierend auf Größen und Arten von Dentalrestaurationen (12) angibt, und dass das Modul basierend auf diesen Werten die Zubringerkanäle hinsichtlich ihrer Länge, ihres Durchmessers und ihres Winkels (30) festlegt oder vorschlägt.

15. Verfahren nach einem der vorhergehenden Ansprüche, wobei der virtuelle Innenraum für die Bereitstellung der Positionierung der Dentalrestaurationen (12) innerhalb der Muffel muffelgrößenabhängig ist und einen Platzierungsraum der Dentalrestaurationen (12) innerhalb der Muffel dergestalt freigibt, wobei jede Dentalrestauration (12) einen Abstand von der Muffel von mindestens 2 mm, insbesondere 10 mm gegenüber der Außenwand der Muffel einhält und radial einwärts die Höhe des virtuellen Innenraums geringer als radial auswärts ist.

16. Verfahren nach einem der vorhergehenden Ansprüche, wobei das Positivmodell (10) per Fräsen hergestellt wird und der Fräsrohling als Zylinder mit einer Zylinderhöhe entsprechend dem virtuellen Raum (32) zwischen 15 mm und 50 mm, insbesondere etwa 40 mm, ausgebildet ist.

17. Verfahren nach einem der vorhergehenden Ansprüche, wobei mindestens ein Zubringerkanal (16) als Blindkanal (40), also ohne Dentalrestauration (12), ausgebildet ist.

18. Dentalkeramik-Erzeugungsvorrichtung, umfassend eine CAD-/CAM-Vorrichtung für die Bereitstellung einer Pressform für die Erzeugung von Dentalkeramiken, wobei die CAD/CAM-Vorrichtung eine CAD-Software aufweist, die dieser basierend auf einem Scanergebnis einer Mundsituation die Form der Dentalrestaurationen (12) festlegt, und wobei die CAD/CAM-Vorrichtung eine CAM-Vorrichtung aufweist, die dieser die Ausgestaltung mehrerer Dentalrestaurationen (12) über eine verlorene Muffel festlegt, wobei die CAD-Software ein Modul aufweist, das Winkellage und die Abmessungen eines jeweiligen Zubringerkanals (16) zwischen einem zentralen Presskanal (20) und einem jeweiligen Hohlraum zur Formung der jeweiligen Dentalrestauration (12) innerhalb eines jeweiligen virtuellen Innenraums innerhalb der Muffel automatisch festlegt, wobei der Anstellwinkel der jeweiligen Dentalrestauration (12) bezogen auf die jeweilige Zubringerkanalachse des zugehörigen Zubringerkanals (16) an einer Andockstelle (34) des Zubringerkanals (16) an der jeweiligen Dentalrestauration (12) an der dicksten Stelle der jeweiligen Dentalrestauration (12) gewählt ist, so festlegbar ist, dass die Verlängerung der jeweiligen Zubringerkanalachse sich durch die größtmögliche Länge der jeweiligen Dentalrestauration (12) von der dicksten Stelle ausgehend erstreckt, insbesondere basierend auf einer voreingestellten Bibliothek aus Formen von Dentalrestaurationen (12) und/oder Zubringerkanälen, und wobei der jeweilige Zubringerkanal (16) mit dem zentralen Presskanal (20) derart verbunden ist, dass diese eine baumartige Anordnung bilden, bei welcher der Presskanal (20) den Baumstamm bildet und die Zubringerkanäle (16) die Äste bilden, an deren Spitze eine Dentalrestauration (12) vorgesehen ist, und wobei durch Dimensionierung des jeweiligen Zubringerkanals (16) der Strömungswiderstand eines als Dentalmaterial verwendeten Keramikmaterials einstellbar ist.

19. Dentalkeramik-Erzeugungsvorrichtung nach Anspruch 18, wobei die Andockstelle (34) der jeweiligen Dentalrestauration (12) an dem jeweiligen Zubringerkanal (16) an der Stelle von dem Modul ausgewählt wird, an welcher eine Kugel mit dem größtmöglichen Durchmesser in die jeweilige Dentalrestauration (12) hineinpasst, wobei die Verlängerung der Achse (14, 24) des jeweiligen Zubringerkanals (16) insbesondere im Wesentlichen durch den Mittelpunkt dieser Kugel verläuft.

20. Dentalkeramik-Erzeugungsvorrichtung nach Anspruch 18 oder 19, wobei jede Dentalrestauration (12) von dem Modul in dem virtuellen Raum (32) hinsichtlich ihrer Anordnung und Ausrichtung so festgelegt ist, dass sie einen Randabstand sowohl zur Außenwand der Muffel als auch zu benachbarten Dentalrestauration (12) hat, die einen vorgegebenen Wert nicht unterschreitet, der insbesondere mehrere Millimeter beträgt.

21. Dentalkeramik-Erzeugungsvorrichtung nach einem der Ansprüche 18 bis 20, wobei die Andockstelle (34) der jeweiligen Dentalrestauration (12) an dem jeweiligen Zubringerkanal (16) in der vertikalen Projektion - bezogen auf die Muffel - so gewählt ist, dass eine schmale Stelle der jeweiligen Dentalrestauration (12) radial nach innen, also dem Presskanal (20) benachbart angerodnet ist, und eine breitere Stelle nach dem Tortenprinzip radial weiter außen.

22. Dentalkeramik-Erzeugungsvorrichtung nach einem der Ansprüche 18 bis 21, wobei jeder Zubringerkanal (16) und/oder die jeweilige Dentalrestauration (12) an einer basalen oder zumindest abgedeckten Stelle mit einem Code oder eine Identifikation versehen ist, die die Zuordnung zu dem betreffenden Auftrag und/oder den betreffenden Patienten erleichtert.

23. Dentalkeramik-Erzeugungsvorrichtung nach einem der Ansprüche 18 bis 22, wobei jede Dentalrestauration (12) in Richtung der Presskanalachse (24) betrachtet zur Bereitstellung eines stetigen und schichtweisen Aufbaus dieser von den monoton steigende oder höchstens nach außen gleichbleibende, jedenfalls nicht nach außen abgesenkte Hüllflächen aufweist, betrachtet je ausgehend von der Andockstelle (34) der betreffenden Dentalrestauration (12) in der Seitenansicht dieser.

24. Dentalkeramik-Erzeugungsvorrichtung nach einem der vorhergehenden Ansprüche, wobei die CAM-Vorrichtung als Nullpunkt des virtuellen Innenraums die Stirnfläche (22) des Presskanals (20) verwendet und eine Zubringerkanal-Basis direkt an dieser Stirnfläche (22) anpolymerisiert, aus welcher sich die Zubringerkanäle weg erstrecken.

## Claims

1. A process for the manufacture of several dental restorations,
- wherein, based on a scanning result of an oral state, using a CAD software, a dental restauration (12) is designed and produced in a residue-free removable material such as wax or polyacrylic, in a shaping step, as a positive model (10) by ablation or generatively, for example by rapid prototyping,
- which positive model (10) is molded and removed via a muffle in a manner known per se, and which muffle is provided with a pressing channel (20) which is connected via a feeder channel (16) to a cavity corresponding to the positive model (10) for the dental restoration (12),
wherein the blank introduced into the pressing channel (20) is heated and pressurized so that it will deform and dental material for forming the dental restorations (12) enters and fills the cavity through the feeder channels (16),
wherein
- during the molding step or subsequently thereto, based on the dimensions of the muffle in relation to the size and shape of the positive model (10) or positive models (10), at least one of the feeder channels (16) is automatically created by a module of the CAD software for each positive model (10),
- wherein the module defines a virtual interior space within the muffle for the arrangement of the dental restorations (12) therein,
- wherein the feeder channels (16) are connected to the pressing channel (20) such that they form a tree-like arrangement in which the pressing channel (20) forms the trunk of the tree and the feeder channels (16) form the branches at the top of which branches one of the dental restorations (12) is provided, the respective feeder channel (10) extending at an angle (30) between more than 0° and 130°, in relation to the axis (24) of the pressing channel (20), extending obliquely away therefrom, essentially along an isotherm in the muffle, and wherein the flow resistance of a ceramic material used as a dental material is set by dimensioning the respective feeder channel (16),
- wherein the site having the thickest wall thickness of the positive model (10) is selected as a docking site (34) of the respective feeder channel (16) on the corresponding dental restoration (12), and the module aligns the positive model (10) with respect to the respective feeder channel (16) such that it extends in extension of the axis (14) of the respective feeder channel (16),
- and the length of a virtual axis (36) through the respective positive model (10) is maximized.

2. The process according to claim claim 1, wherein the length and thickness of each feeder channel (16) relative to the other feeder channels is adjusted to match the volume of its associated dental restoration (12), and in such a way that during pressing the complete filling of the dental restoration (12) takes place simultaneously, in that feeder channels for larger dental restorations (12) are set to a lower flow resistance and feeder channels for smaller dental restorations (12) are set to a higher flow resistance, and in that in particular the flow resistances of the feeder channels are each selected in proportion to the weight of the associated dental restorations (12).

3. The process according to one of the claims 1 or 2, wherein the module, based on the shape of the respective dental restoration (12) and thus of the respective positive model (10), starting from the thickest portion, i.e. the portion having the greatest wall thickness for this, determines a primary flow direction for the dental material as the direction in which the flow cross-section is greatest at a predetermined distance from the thickest portion, and in that the longest virtual axis (36) is defined by the positive model (10) in extension of the respective feeder channel axis according to claim 1, but deviating in the direction of the primary flow direction.

4. The process according to one of the preceding claims, wherein the orientation of each dental restoration (12) itself and thus of the respective positive model (10) itself within the muffle is determined by the module such that its greatest longitudinal extent substantially extends along an isotherm.

5. The process according to one of the preceding claims, wherein simultaneous manufacture of a plurality of dental restorations (12) is arranged substantially along the envelope of a cone and uniformly distributed around the pressing channel (20) which substantially terminates at the apex of said cone.

6. The process according one of the preceding claims, wherein the feeder channels are provided with radii (42, 44) and/or continuous transitions on both the input side, i.e. towards the pressing channel (20), and the output side, i.e. towards the dental restoration (12).

7. The process according one of the preceding claims, wherein each feeder channel (16) defined by the module, using its axis (14, 24) extended through the dental restoration (12) determines the orientation of the respective dental restoration (12), and that the orientation of the respective dental restoration (12) is selected such that the passage length of the respective extended feeder channel (16) through the respective dental restoration (12) is maximized.

8. The process according one of the preceding claims, wherein one of the dental restorations is formed as a crown or bridge (49) and the basal surface of the crown (49) extends in extension of a pressing channel axis (24) with its open side facing away from the pressing channel (20).

9. The process according to claim claims 5 or 6, wherein one of the dental restorations (12) is formed as a prefacette or veneer; and the basal surface of the prefacette or veneer extends in a radially outward direction in relation to a pressing channel axis (24).

10. The process according to one of the preceding claims, wherein the alignment of each dental restoration (12) with respect to the respective feeder channel axis through the respective dental restoration (12) extends through the center of mass of the respective dental restoration (12) when the respective feeder channel axis is arranged at the thickest portion of the respective dental restoration (12).

11. The process according to one of the preceding claims, wherein the module connects the respective feeder channel (16) off-center with respect to the outer surfaces of the respective dental restoration (12), in particular substantially in extension of a labial or buccal surface.

12. The process according to one of the preceding claims, wherein the length of each feeder channel (16) is determined by the module as a function of the size and weight of the respective dental restoration (12), in particular for larger dental restorations (12) such as molars, crowns (49) or maxillary anterior crowns having a length of 30% to 50% of the length of the main extension direction of the dental restoration (12) and for smaller dental restorations (12) such as mandibular anterior crowns having a length of 40% to 65% of the length of the main extension direction of the dental restorations (12).

13. The process according to one of the preceding claims, 1 wherein, upon arrangement of a plurality of dental restorations (12) in a muffle, the module sets the feeder channels thereto such that the dental restorations (12) are evenly spaced apart, i.e. in an isothermal corridor, and spanning a polyhedron similar to a cone upon formation of imaginary connecting lines therebetween.

14. The process according to one of the preceding claims, wherein the module accesses a feeder channel library indicating different profile designs, lengths, docking sites and angles (30) of feeder channels based on sizes and types of dental restorations (12), and that, based on these values, the module determines or suggests the feeder channels in terms of lengths, diameters and angles (30) thereof.

15. The process according one of the preceding claims, wherein the virtual inner space for providing the positioning of the dental restorations (12) within the muffle is muffle size-dependent and enables a placement space of the dental restorations (12) within the muffle such that each dental restoration (12) maintains a distance of at least 2 mm from the muffle, in particular 10 mm, in relation to the outer wall of the muffle and, in the radial inward direction, the height of the virtual inner space is less than in the radial outward direction.

16. The process according to one of the preceding claims, wherein the positive model (10) is produced by milling and the milled blank is designed as a cylinder having a cylinder height corresponding to the virtual space (32) of between 15 mm and 50 mm, in particular about 40 mm.

17. The process according one of the preceding claims, wherein at least one feeder channel (16) is designed as a blind channel (40), i.e. devoid of dental restoration (12).

18. A dental ceramic manufacturing device, comprising a CAD/CAM device for providing a press mold for the manufacture of dental ceramics, wherein the CAD/CAM device has CAD software which determines the shape of the dental restorations (12) therefor based on a scanning result of an oral state, and wherein the CAD/CAM device has a CAM device which determines the configuration of a plurality of dental restorations (12) therefor via a lost muffle, wherein the CAD software comprises a module which automatically determines the angular position and the dimensions of a respective feeder channel (16) between a central pressing channel (20) and a respective cavity for shaping the respective dental restoration (12) within a respective virtual inner space within the muffle, wherein the angle of incidence of the respective dental restoration (12) in relation to the respective feeder channel axis of the associated feeder channel (16) at a docking site (34) of the feeder channel (16) on the respective dental restoration (12) is selected at the thickest part of the respective dental restoration (12), is settable such that the extension of the respective feeder channel axis extends through the greatest possible length of the respective dental restoration (12) starting from the thickest part, in particular based on a preset library of shapes of dental restorations (12) and/or feeder channels, and wherein the respective feeder channel (16) is connected to the central pressing channel (20) such that they form a tree-like arrangement, in which the pressing channel (20) forms the tree trunk and the feeder channels (16) form the branches at the tip of which a dental restoration (12) is provided, and wherein the flow resistance of a ceramic material used as dental material can be adjusted by dimensioning the respective feeder channel (16).

19. The dental ceramic manufacturing device according to claim 18, wherein the docking site (34) of the respective dental restoration (12) to the respective feeder channel (16) is selected by the module at the portion at which a ball with the largest possible diameter fits into the respective dental restoration (12), wherein the extension of the axis (14, 24) of the respective feeder channel (16) in particular extends substantially through the center of this ball.

20. The dental ceramic manufacturing device according to claims 18 or 19, wherein each dental restoration (12) is determined by the module in the virtual space (32) with regard to its arrangement and orientation such that it has an edge distance both from the outer wall of the muffle and from adjacent dental restorations (12) which does not fall below a predetermined value, which in particular is several millimeters.

21. The dental ceramic manufacturing device according to one of the claims 18 to 20, wherein the docking sites (34) of the respective dental restoration (12) to the respective feeder channel (16) in the vertical projection in relation to the muffle is selected such that a narrow site of the respective dental restoration (12) is arranged radially inwards, i.e. adjacent to the pressing channel (20), and a wider site is arranged radially further outwards according to the pie principle.

22. The dental ceramic manufacturing device according to one of the claims 18 to 21, wherein each feeder channel (16) and/or the respective dental restoration (12) is provided with a code or an identification at a basal site or at a site which at least is covered which code facilitates the assignment to the respective order and/or the respective patients.

23. The dental ceramic manufacturing device according to one of the claims 18 to 22, wherein each dental restoration (12), as viewed in the direction of the pressing channel axis (24), in order to provide a continuous and layered build-up thereof, comprises enveloping surfaces which monotonously rise or at most remain outwardly constant, and in any case are not lowered outwardly, as viewed in each case starting from the docking site (34) of the respective dental restoration (12) in the side view thereof.

24. The dental ceramic manufacturing device according to one of the preceding claims, wherein the CAM device uses the front surface (22) of the pressing channel (20) as the zero point of the virtual inner space and polymerizes a feeder channel base directly onto this front surface (22), from which the feeder channels extend away.

## Revendications

1. Procédé de production de plusieurs restaurations dentaires,
- où, sur la base d'un résultat de balayage d'une situation buccale, une restauration dentaire (12) est conçue par un logiciel de CAO et produite dans un matériau amovible sans résidus tel que la cire ou le polyacrylique, dans une étape de mise en forme, comme modèle positif (10) par enlèvement ou de manière générative, par exemple par prototypage rapide,
- ledit modèle positif (10) d'une manière connue en soi est moulé et retiré par l'intermédiaire d'un moufle, et ledit moufle est muni d'un canal de presse (20) qui est relié par un canal d'alimentation (16) à une cavité correspondant au modèle positif (10) pour la restauration dentaire (12) où le lingotin introduit dans le canal de pressage (20) est chauffée et mis sous pression de manière à se déformer et le matériau dentaire destiné à former les restaurations dentaires (12) s'écoule dans la cavité et la remplit par les canaux d'alimentation (16), où
- pendant ou à la suite de l'étape de moulage, en fonction des dimensions du moufle par rapport à la taille et à la forme du ou des modèles positifs (10), au moins un des canaux d'alimentation (16) est automatiquement créé par un module du logiciel de CAO pour chaque modèle positif (10),
- où le module détermine un espace intérieur virtuel à l'intérieur du moufle pour y disposer les restaurations dentaires (12),
- où les canaux d'alimentation (16) sont reliés au canal de presse (20) de telle manière à former un arrangement en forme d'arbre dans lequel le canal de pressage (20) forme le tronc de l'arbre et les canaux d'alimentation (16) forment les branches à la pointe desquelles est prévue l'une des restaurations dentaires (12), où le canal d'alimentation (16) respectif s'étend obliquement à partir du canal de pressage (20) selon un angle (30) compris entre plus de 0° et 130° par rapport à l'axe (24) du canal de pressage (20), essentiellement le long d'un isotherme dans le moufle, et où la résistance à l'écoulement d'un matériau céramique utilisé comme matériau dentaire est ajustée en dimensionnant le canal d'alimentation respectif (16),
- où le point ayant l'épaisseur de paroi la plus épaisse du modèle positif (10) est choisi comme point d'ancrage (34) du canal d'alimentation respectif (16) sur la restauration dentaire correspondante (12), et le module aligne le modèle positif (10) par rapport au canal d'alimentation respectif (16) de telle sorte qu'il s'étende dans le prolongement de l'axe (14) du canal d'alimentation respectif (16) et la longueur d'un axe virtuel (36) est maximisée par le modèle positif respectif (10).

2. Procédé selon la revendication 1, où la longueur et l'épaisseur de chaque canal d'alimentation (16) par rapport aux autres canaux d'alimentation sont ajustées pour correspondre au volume de la restauration dentaire (12) qui lui est associée, et de telle manière que, pendant le pressage, le remplissage complet de la restauration dentaire (12) se produit simultanément, et ainsi que les canaux d'alimentation pour les grandes restaurations dentaires (12) sont réglés sur une résistance à l'écoulement plus faible et les canaux d'alimentation pour les petites restaurations dentaires (12) sur une résistance à l'écoulement plus élevée, et que notamment la résistance à l'écoulement des canaux d'alimentation est choisie respectivement proportionnellement au poids des restaurations dentaires (12) associées.

3. Procédé selon l'une des revendications 1 ou 2, où le module, sur la base de la forme de la restauration dentaire respective (12) et donc du modèle positif respectif (10), en partant du point le plus épais, c'est-à-dire du point ayant la plus grande épaisseur de paroi de celle-ci, détermine une direction d'écoulement primaire pour le matériau dentaire comme étant la direction dans laquelle la section transversale d'écoulement est la plus grande à une distance prédéterminée du point le plus épais, et en ce que l'axe virtuel le plus long (36) est défini par le modèle positif (10) comme une extension de l'axe du canal d'alimentation respectif selon la revendication 1, mais s'écartant vers la direction du flux primaire.

4. Procédé selon l'une quelconque des revendications précédentes, où l'orientation de chaque restauration dentaire (12) elle-même et donc du modèle positif (10) respectif lui-même à l'intérieur du moufle est déterminé par le module de telle manière que sa plus grande étendue longitudinale s'étend sensiblement le long d'un isotherme.

5. Procédé selon l'une quelconque des revendications précédentes, où la production simultanée de plusieurs restaurations dentaires (12) est disposée sensiblement le long de l'enveloppe d'un cône et répartie uniformément autour du canal de presse (20) qui se termine sensiblement au sommet dudit cône.

6. Procédé selon l'une des revendications précédentes, où les canaux d'alimentation sont munis de rayons (42, 44) et/ou de transitions continues tant du côté de l'entrée, c'est-à-dire vers le canal de presse (20), que du côté de la sortie, c'est-à-dire vers la restauration dentaire (12).

7. Procédé selon l'une quelconque des revendications précédentes, où chaque canal d'alimentation (16) déterminé par le module avec son axe (14, 24) étendu à travers la restauration dentaire respective (12) détermine l'orientation de la restauration dentaire respective (12) et l'orientation de la restauration dentaire respective (12) est choisie de telle manière que la longueur de passage du canal d'alimentation étendu respectif (16) à travers la restauration dentaire respective (12) est maximisée.

8. Procédé selon l'une des revendications précédentes, où l'une des restaurations dentaires (12) est formée comme une couronne ou un bridge (49) et la surface de base de la couronne (49) s'étend dans le prolongement d'un axe de canal de pressage (24) avec son côté ouvert éloigné du canal de pressage (20).

9. Procédé selon la revendication 5 ou 6, où l'une des restaurations dentaires (12) est réalisée sous forme de pré-facette ou de facette et la surface de base de la pré-facette ou de la facette s'étend radialement vers l'extérieur par rapport à un axe de canal de pressage (24).

10. Procédé selon l'une quelconque des revendications précédentes, où l'orientation de chaque restauration dentaire (12) par rapport à l'axe du canal d'alimentation respectif est choisie de telle manière que le prolongement de l'axe du canal d'alimentation respectif à travers la restauration dentaire (12) respective passe par le centre de masse de la restauration dentaire (12) respective lorsque l'axe du canal d'alimentation respectif est disposé sur le point le plus épais de la restauration dentaire (12) respective.

11. Procédé selon l'une des revendications précédentes, où le module relie le canal d'alimentation respectif (16) de manière excentrée par rapport aux surfaces extérieures de la restauration dentaire respective (12), en particulier sensiblement dans le prolongement d'une surface labiale ou buccale.

12. Procédé selon l'une des revendications précédentes, où la longueur de chaque canal d'alimentation (16) est déterminée par le module en fonction de la taille et du poids de la restauration dentaire (12) respective, en particulier pour les restaurations dentaires (12) de grande taille telles que les molaires, les couronnes (49) ou les couronnes antérieures maxillaires d'une longueur de 30 à 50 % de la longueur de la direction d'extension principale de la restauration dentaire (12) et pour les restaurations dentaires plus petites (12) telles que les couronnes antérieures mandibulaires d'une longueur de 40 à 65 % de la longueur de la direction d'extension principale de la restauration dentaire (12).

13. Procédé selon l'une quelconque des revendications précédentes, où, lorsque plusieurs restaurations dentaires (12) sont disposées dans un moufle, le module définit les canaux d'alimentation de celui-ci de telle manière à espacer les restaurations dentaires (12) de manière régulière, dans un couloir isotherme, et lorsque des lignes de connexion imaginaires sont formées entre elles montent un polyèdre se rapprochant d'un cône.

14. Procédé selon l'une des revendications précédentes, où le module accède à une bibliothèque de canaux d'alimentation indiquant différents modèles de profil, longueurs, points d'ancrage et angles (30) de canaux d'alimentation en fonction des tailles et des types de restaurations dentaires (12), et sur la base de ces valeurs, le module détermine ou propose les canaux d'alimentation en termes de longueur, de diamètre et d'angle (30).

15. Procédé selon l'une quelconque des revendications précédentes, où l'espace intérieur virtuel pour assurer le positionnement des restaurations dentaires (12) à l'intérieur du moufle dépend de la taille du moufle et libère un espace de placement des restaurations dentaires (12) à l'intérieur du moufle de telle manière que chaque restauration dentaire (12) conserve une distance d'au moins 2 mm, en particulier 10 mm par rapport à la paroi extérieure du moufle et, radialement vers l'intérieur, la hauteur de l'espace intérieur virtuel est inférieure à la hauteur radiale vers l'extérieur.

16. Procédé selon l'une des revendications précédentes, où le modèle positif (10) est produit par fraisage et le lingotin fraisée est formée comme un cylindre avec une hauteur de cylindre correspondant à l'espace virtuel (32) comprise entre 15 mm et 50 mm, en particulier environ 40 mm.

17. Procédé selon l'une des revendications précédentes, où au moins un canal d'alimentation (16) est formé comme canal aveugle (40), c'est-à-dire sans restauration dentaire (12).

18. Appareil de production de céramique dentaire comprenant un dispositif de CAO/FAO pour fournir un moule de presse pour la production de céramique dentaire, où ledit dispositif de CAO/FAO présente un logiciel de CAO qui détermine la forme des restaurations dentaires (12) sur la base d'un résultat de balayage d'une situation orale, et ledit dispositif de CAO/FAO présente un logiciel de FAO qui détermine la configuration d'une pluralité de restaurations dentaires (12) via un moufle perdu, où ledit logiciel de CAO présente un module qui détermine automatiquement la position angulaire et les dimensions d'un canal d'alimentation respectif (16) entre un canal de presse central (20) et une cavité respective pour façonner la restauration dentaire respective (12) dans un espace intérieur virtuel respectif à l'intérieur du cylindre de revêtement, où l'angle d'incidence de la restauration dentaire respective (12) par rapport à l'axe du canal d'alimentation respectif du canal d'alimentation associé (16) est sélectionné en un point d'ancrage (34) du canal d'alimentation (16) sur la restauration dentaire respective (12) au point le plus épais de la restauration dentaire respective (12), peut être déterminé de telle manière que l'extension de l'axe du canal d'alimentation respectif s'étende sur la plus grande longueur possible de la restauration dentaire (12) respective en partant du point le plus épais, en particulier sur la base d'une bibliothèque prédéfinie de formes de restaurations dentaires (12) et/ou de canaux d'alimentation, et où le canal d'alimentation (16) respectif est relié au canal de presse central (20) de telle manière que ceux-ci forment un arrangement en forme d'arbre, où le canal de pressage (20) forme le tronc de l'arbre et les canaux d'alimentation forment les branches, à l'extrémité desquelles est prévue une restauration dentaire (12), et où la résistance à l'écoulement d'un matériau céramique utilisé comme matériau dentaire peut être réglée en dimensionnant le canal d'alimentation (16) respectif.

19. Dispositif de fabrication de céramique dentaire selon la revendication 18, où le point d'ancrage (34) de la restauration dentaire respective (12) au canal d'alimentation respectif (16) est choisi par le module à l'endroit où une bille du plus grand diamètre possible s'adapte dans la restauration dentaire respective (12), où le prolongement de l'axe (14, 24) du canal d'alimentation respectif (16) passe en particulier essentiellement par le point central de cette bille.

20. Dispositif de production de céramique dentaire selon la revendication 18 ou 19, où chaque restauration dentaire (12) est définie par le module dans l'espace virtuel (32) en termes de disposition et d'orientation de manière à avoir une distance de bord à la fois de la paroi extérieure du moufle et des restaurations dentaires adjacentes (12) qui n'est pas inférieure à une valeur prédéterminée, qui est en particulier de plusieurs millimètres.

21. Dispositif de fabrication de céramique dentaire selon l'une des revendications 18 à 20, où le point d'ancrage (34) de la restauration dentaire (12) respective au canal d'alimentation (16) respectif en projection verticale - par rapport au cylindre de pressage - est choisi de telle manière qu'un point étroit de la restauration dentaire (12) respective est disposé radialement vers l'intérieur, c'est-à-dire à proximité du canal d'alimentation. (20), et un point plus large est disposé radialement plus loin vers l'extérieur selon le principe du camembert.

22. Dispositif de production de céramique dentaire selon l'une quelconque des revendications 18 à 21, où chaque canal d'alimentation (16) et/ou la restauration dentaire respective (12) est pourvu, à un emplacement basal ou au moins couvert, d'un code ou d'une identification qui facilite l'affectation à l'ordre respectif et/ou aux patients respectifs.

23. Dispositif de fabrication de céramique dentaire selon l'une des revendications 18 à 22, où chaque restauration dentaire (12), vue dans la direction de l'axe du canal de pressage (24), présente, pour sa constitution continue et stratifiée, des surfaces enveloppantes qui s'élèvent de manière monotone ou tout au plus restent constantes vers l'extérieur, et ne sont en tout cas -pas' abaissées vers l'extérieur, vu dans chaque cas à partir du point d'ancrage (34) de la restauration dentaire (12) respective en vue latérale de celle-ci.

24. Dispositif de production de céramique dentaire selon l'une des revendications précédentes, où le dispositif FAO utilise la face d'extrémité (22) du canal de pressage (20) comme point zéro de l'espace intérieur virtuel et polymérise une base de canal d'alimentation directement sur cette face d'extrémité (22), à partir de laquelle les canaux d'alimentation s'étendent.
